**Europäisches Patentamt**

**European Patent Office**

**Office européen des brevets**

(11) Veröffentlichungsnummer: **0 176 476**
**A1**

## (12) EUROPÄISCHE PATENTANMELDUNG

(21) Anmeldenummer: **85810394.8**

(22) Anmeldetag: **30.08.85**

(51) Int. Cl.⁴: **B 01 J 20/08**
**C 01 F 7/02**

(30) Priorität: **14.09.84 CH 4410/84**

(43) Veröffentlichungstag der Anmeldung:
**02.04.86 Patentblatt 86/14**

(84) Benannte Vertragsstaaten:
**AT BE CH DE FR GB IT LI LU NL SE**

(71) Anmelder: **SCHWEIZERISCHE ALUMINIUM AG**

**CH-3965 Chippis(CH)**

(72) Erfinder: **Weingärtner, Fritz**
**Ostermannstrasse 17**
**D-5014 Kerpen-Horrem(DE)**

(54) Verfahren zur Herstellung von hochaktivem, dispersem Aluminiumleichtoxidhydrat und Formkörper aus Aluminiumleichtoxid sowie Verfahren zur Herstellung der Formkörper.

(57) Die Erfindung betrifft ein Verfahren zur Herstellung von hockaktivem, dispersem Aluminiumleichtoxidhydrat. Vorerst wird ungemahlenes, sehr feinkörniges Aluminiumtrihydroxid, wovon mehr als 99% der Körner eine Grösse von höchstens 3 μm haben, kontinuierlich in einen Reaktor mit einem trokkenen Heissluftstrom geleitet, unter Aufwirbelung und starker Dispergierung auf 400-600°C erwärmt und stossentwässert. Das aus dem Reaktor im Luftstrom abfliessende Aluminiumleichtoxid wird mit geeigneten mechanischen Mitteln abgeschieden, in schwach saurem oder schwach basischem Wasser dispergiert und unter Erwärmen rehydratisiert.

Weiter bezieht sich die Erfindung auf Formkörper aus hochaktivem, dispersem Aluminiumleichtoxid mit einer spezifischen Oberfläche von mindestens 200 m²/g, einem Porenvolumen von über 1,2 cm³g sowie hinreichender Bruch- und Abriebfestigkeit.

Die Formkörper werden insbesondere hergestellt, indem Aluminumleichtoxidkörner mit rehydratisierten Körnern versetzt und als plastifizierbare Masse extrudiert oder die Aluminiumleichtoxidkörner unter Zugabe von Wasser durch Aufbaugranulierung gerollt werden.

Croydon Printing Company Ltd

VERFAHREN ZUR HERSTELLUNG VON HOCHAKTIVEM, DISPERSEM
ALUMINIUMLEICHTOXIDHYDRAT UND FORMKÖRPER AUS ALUMINIUM-
LEICHTOXID SOWIE VERFAHREN ZUR HERSTELLUNG DER FORMKÖRPER

Die vorliegende Erfindung bezieht sich auf ein Verfahren
zur Herstellung von hochaktivem, dispersem Aluminiumleichtoxidhydrat, auf Formkörper aus hochaktiven, dispersen Aluminiumleichtoxid mit einer spezifischen Oberfläche von mindestens 200 m$^2$/g und hinreichender Bruch- und Abriebfestigkeit, sowie auf Verfahren zur Herstellung der Formkörper.

Es sind mehrere Verfahren zur Herstellung von Formkörpern
aus aktiven Aluminiumoxiden bekannt. Allen Verfahren zur
Herstellung von aktivem Aluminiumoxid in Granulatform ist
gemeinsam, dass entweder gemahlenes Tonerdetrihydrat mit
Hilfe von Bindemitteln in Formkörper überführt, die dann
durch Erhitzen unter unvollständiger Hydratwasserabspaltung
aktiviert werden, oder es wird zunächst durch Erhitzen von
Tonerdehydrat ein aktives Aluminiumoxid in Pulverform hergestellt, das gemahlen und unter Wasserzusatz granuliert
wird.

Nach der DE-OS 22 27 804 haben die auf letztere Weise hergestellten aktiven Aluminiumoxidgranulate eine spezifische
Oberfläche nach BET von 300 bis 450 m$^2$/g eine Bruchhärte
von etwa 15 bis 30 kg und ein Gesamtporenvolumen von 40 bis
50 cm$^3$/100 g, wenn sie durch Aufrollgranulation hergestellt
werden. Für den Einsatz als Katalysator bzw. Katalysatorträger, welche mit katalytisch wirksamen Stoffen imprägniert werden, sind Porenvolumen der oben angegebenen Grösse
vielfach zu gering. Der Stofftransport in einem voluminösen Körper erfolgt naturgemäss viel rascher, je poröser er ist: die "katalytische Aktivität" ist eine Funktion des Porenvolumens. Es hat deshalb nicht an Vorschlägen zur Erzielung möglichst hoher Porenvolumen in Aktivtonerde-Granulaten gefehlt. Abgesehen von der Aufwendigkeit der Verfahren muss, wie Beispiel 2 der als Zusatz zur obenstehenden DE-OS 22 27 804 angemeldeten DE-OS 24 39 543 deutlich zeigt, eine wesentliche Verminderung der Bruchhärte in Kauf genommen werden.

Nach zahlreichen Verfahren werden dem Granulat organische Stoffe zugesetzt und diese später herausgebrannt, wodurch die Poren entstehen.

In der bereits erwähnten DE-OS 24 39 543 wird vorgeschlagen, dem feingemahlenen aktiven Aluminiumoxid-Pulver vor der Granulierung rückstandfreie, wasserlösliche Salze und/ oder nicht-ionogene Stoffe, die nicht mit Aluminiumoxid reagieren, in feingemahlener trockener Form zuzugeben. Die Anteile liegen bei 30 bis 90 Gew.-% Aluminiumoxid und 10 bis 70 Gew.-% Zusatzstoff. Die Mischung wird unter Wasserzusatz granuliert, das Granulat mindestens 5 Stunden lang bei 50 bis 100°C gealtert und dann der wasserlösliche Zusatz herausgewaschen. Schliesslich wird das Granulat in üblicher Weise getrocknet und aktiviert.

Beide Verfahren zur Herstellung von porösem Aluminiumoxid, welche mit Zusatzstoffen arbeiten, haben erhebliche Nachteile. Die Zugabe von organischen Stoffen führt zu einem Rückgang der spezifischen Oberfläche wegen der erforderlichen hohen Temperaturen zur Verbrennung des organischen Anteils. Nach der DE-OS 24 39 543 ergeben sich erhebliche Abwasserprobleme. Gegenüber Formkörpern, die ohne Zusätze hergestellt werden, ergeben sich deutliche Einbussen an Festigkeit.

Aus der DE-OS 32 43 193 ist ein als Katalysator einsetzbares, wasserhaltiges Aluminiumoxid bekannt, welches im wesentlichen Pseudoböhmit enthält, und weniger als 400 ppm $Na_2O$, weniger als 3 Gew.-% Sulfat, einen Peptisierungsindex von weniger als 60 Min. und eine spezifische Oberfläche von 200 bis 400 $m^2/g$ hat. Zu dessen Herstellung werden eine Aluminiumsulfat-Lösung und eine Natriumaluminat-Lösung gleichzeitig in eine Vorlage von Wasser eingeleitet. Dies erfolgt derart, dass während der Fällung ein konstanter pH-Wert von weniger als 5 eingehalten wird. Danach wird der pH-Wert durch weitere Zugabe von Natriumaluminatlauge in den alkalischen Bereich verschoben. Der ausgefällte Pseudoböhmit wird gealtert, abfiltriert, gewaschen und getrocknet.

Nach weiteren bekannten Verfahren kann Pseudoböhmit mit grosser spezifischer Oberfläche dadurch hergestellt werden, dass er mittels Ammoniakzugabe aus aluminiumhaltigen Salzlösungen ausgefällt und in üblicher Weise abfiltriert, gewaschen und getrocknet wird.

Alle heute im Handel erhältlichen Formkörper aus aktivem Aluminiumoxid haben den Nachteil, dass sie - wenn eine hinreichende Bruch- und Abriebfestigkeit erreicht werden soll - ein Porenvolumen von höchstens 0,7 $cm^3/g$ haben. Weiter müssen zu ihrer Herstellung auf nasschemischem Wege aufwendige Verfahrenstechniken angewandt werden, indem zuerst das Aluminiumhydroxid aufgelöst und dann mittels Ammoniak- oder Säurezugabe wieder ausgefällt werden muss.

Der Erfinder hat sich deshalb die Aufgabe gestellt, ein hochaktives, disperses Aluminiumleichtoxidhydrat, das sich als Bindemittel und Matrixbildner bei der Herstellung von Katalysatoren, Katalysatorträgern, Adsorptions- und Trocknungsmittel eignet, sowie Formkörper aus Aluminiumleichtoxid mit höherem Porenvolumen und Verfahren zu deren Herstellung zu schaffen, die in bezug auf Bruch- und Abriebfestigkeit die üblichen Normen von weniger porösen Formkörpern erfüllen, einfach und wirtschaftlich herstellbar und in einem breiten Spektrum von Verwendungsmöglichkeiten einsetzbar sind.

Das erfindungsgemässe Verfahren zur Herstellung von hochaktivem, dispersem Aluminiumleichtoxidhydrat ist dadurch gekennzeichnet, dass

- ungemahlenes, sehr feinkörniges Aluminiumtrihydroxid, wovon mehr als 99% der Körner eine Grösse von höchstens 3 µm haben, kontinuierlich in einem Reaktor mit einem trockenen Heissluftstrom geleitet und unter Aufwirbelung und starker Dispergierung auf 400-600°C erwärmt und stossentwässert wird, wobei im Reaktor nach wenigen Sekunden ein stationärer Zustand erreicht ist, bei welchem gleichviel teilentwässertes Aluminiumleichtoxid abfliesst, wie Aluminiumtrihydroxid zugeleitet wird,

- das aus dem Reaktor im Luftstrom abfliessende Aluminiumleichtoxid mit geeigneten mechanischen Mitteln abgeschieden, in schwach saurem oder schwach basischem Wasser dispergiert und durch Erwärmen rehydratisiert wird, wobei Aluminiumhydroxid gebildet wird, welches als gelförmiger Pseudoböhmit und/oder Bayerit vorliegt, und

- bei Temperaturen unterhalb der Aktivierungstemperatur getrocknet wird.

Die an sich bekannte Stossentwässerung wird bevorzugt in einem als sich nach oben konusförmig öffnende Kammer ausgebildeten Reaktor durchgeführt, in welchen die Heissluft unten tangential eingeleitet wird und so kreisend, nach oben sich erweiternd, aufsteigt. Das oben im Zentrum der Kammer zugegebene feinteilige Aluminiumtrihydroxid wird von der Zirkulationsbewegung aufgewirbelt und stark dispergiert. Die Stossentwässerung erfolgt innerhalb sehr kurzer Zeit, z.B. 2-4 Sekunden. Dann werden die Teilchen aus der Reaktionskammer geschleudert und in einen Sammelbehälter geleitet, bzw. kontinuierlich dem schwach sauren oder schwach basischen Wasser zur Rehydratisierung oder der kontinuierlichen Aufbaugranulierung zugeführt.

Das der Stossentwässerung zugeführte feinteilige Aluminiumtrihydroxid hat in der Praxis eine zwischen 0,4 und 0,6 µm liegende mittlere Korngrösse, insbesondere eine bei etwa 0,5 µm. Der in die Reaktionskammer geblasene trockene Heissluftstrom hat bevorzugt eine Temperatur von 800-1200°C. Diese Temperatur ist zur Erreichung der Endtemperatur der Partikel von 400-600°C in dem Fachmann bekannter Weise mit den übrigen Parametern abzustimmen, wobei beispielsweise die Heissluftmenge, das Reaktorvolumen, die mittlere Korngrösse des Aluminiumtrihydroxids und die Verweilzeit der Partikel im Reaktor genannt seien.

Bevorzugt wird das durch die Stossentwässerung gebildete Aluminiumleichtoxid, welches zweckmässig einen Restwassergehalt von 1-8 Gew.-%, insbesondere 4-6 Gew.-%, hat, mittels mindestens eines Zyklons oder Sackfilters abgeschieden.

In der nächsten Verfahrensstufe wird das durch Stossentwässerung aktivierte Aluminiumleichtoxid rehydratisiert. Dazu werden in 1 m$^3$ Wasser vorzugsweise 10-200 kg Aluminiumleichtoxid gegeben und darin dispergiert. Die Dispersion wird zweckmässig auf 20-100°C, vorzugsweise auf 40-80°C, erwärmt und während 0,5-24 Stunden, vorzugsweise während 1,5-3 Stunden, auf dieser Temperatur belassen. Das als Dispergierungsmittel eingesetzte Wasser ist bevorzugt schwach sauer oder schwach basisch.

Beim Rehydratisieren mit kontrollierten Parametern, Temperatur, pH-Wert und Intensität der Rührung entsteht ein Aluminiumleichtoxidhydrat, das nach dem Trocknen bei etwa 110-120°C einen Wassergehalt zwischen 15-22 (Pseudoböhmit) und 34 Gew.-% (Bayerit) hat. Der in der Regel in überwiegender Menge gebildete Pseudoböhmit ist gelförmig. Seine pseudokristalline Natur, gebildet durch viele Gitterstörstellen in den sehr feinteiligen Körnern, verleiht dem daraus hergestellten Festkörper eine sehr hohe Porosität und eine grosse spezifische Oberfläche.

Das nach dem Rehydratisieren getrocknete hochdisperse Pulver aus Pseudoböhmit und/oder Bayerit ist gut peptisierbar und eignet sich deshalb als Bindemittel und Matrixbildner für die Herstellung von Formkörpern, die als Katalysatoren, Katalysatorenträger, Adsorptions- und Trocknungsmittel eingesetzt werden.

In bezug auf die Formkörper aus hochaktivem, dispersem Aluminiumleichtoxid wird die Aufgabe erfindungsgemäss gelöst durch eine sehr feine Struktur aus ungemahlenen Körnern mit einem $Na_2O$-Gehalt von weniger als 1,5 Gew.-% und einem Porenvolumen von über 1,2 $cm^3/g$, wobei mehr als 99% der Körner eine Grösse von höchstens 1 µm haben.

Die sehr feinen Körner werden vorzugsweise nach einem in den DE-PS 897 843 oder 952 978 beschriebenen Verfahren vorerst als Tonerdehydrat ausgefällt und dann in bekannter Weise bis zum Erreichen des erwünschten Restwassergehaltes bis 34 Gew.-% getrocknet. Dabei wird üblicherweise eine mittlere Korngrösse von 0,4-0,6 µm erreicht, wobei der Anteil der Körner mit einer Grösse von höchstens 3 µm über 99% beträgt. Bei Fällungstemperaturen von 60-70°C liegt der $Na_2O$-Gehalt vorzugsweise unterhalb von etwa 1 Gew.-%.

Auf dem Gebiet der Katalysatortechnik werden oft geringere $Na_2O$-Gehalte gefordert, die in speziellen Fällen unter 0,1 Gew.-% liegen müssen. Als Basis für den erfindungsgemässen Formkörper muss in diesem Fall ein feinkörniges Material hergestellt werden, das einen entsprechend niedrigen $Na_2O$-Gehalt hat. Zu diesem Zweck werden die Verfahren zur Herstellung von feinkörnigem Aluminiumoxidhydrat gemäss DE-PS 897 843 oder 952 978 dahingehend modifiziert, dass die Ausfällung bei Temperaturen von ca. 80°C oder darüber erfolgt.

In bezug auf das Verfahren zur Herstellung der Formkörper wird die Aufgabe nach einer ersten Ausführungsform erfindungsgemäss dadurch gelöst, dass

- ungemahlenes, sehr feinkörniges Aluminiumtrihydroxid, wovon mehr als 99% der Körner eine Grösse von höchstens 3 μm haben, kontinuierlich in einen Reaktor mit einem trockenen Heissluftstrom geleitet und unter Aufwirbelung und starker Dispergierung auf 400-600°C erwärmt und stossentwässert wird, wobei im Reaktor nach wenigen Sekunden ein stationärer Zustand erreicht ist, bei welchem gleichviel teilentwässertes Alumiminiumleichtoxid abfliesst, wie Aluminiumtrihydroxid zugeleitet wird,

- das aus dem Reaktor im Luftstrom abfliessende Aluminiumleichtoxid mit geeigneten mechanischen Mitteln abgeschieden, in schwach saurem oder schwach basischem Wasser dispergiert und durch Erwärmen rehydratisiert wird, wobei Aluminiumhydroxid gebildet wird, welches grösstenteils als gelförmiger Pseudoböhmit und/oder Bayerit vorliegt,

- der gelförmige Pseudoböhmit und/oder Bayerit durch Zugabe von stossentwässertem Aluminiumleichtoxid und/oder getrocknetem Pseudoböhmitpulver und/oder getrocknetem Bayerit in einer Mischapparatur zu einer plastifizierbaren Masse verfestigt wird/werden, und

- diese Masse zu Formkörpern verarbeitet und oberhalb 550°C getrocknet bzw. aktiviert wird.

Gelförmiges Pseudeböhmit und/oder Bayerit hat/haben einen sehr hohen Wassergehalt, beispielsweise 80 Gew.-% Wasser und 20 Gew.-% Feststoff, und ist/sind deshalb in keiner Weise formbar. Zur Umwandlung in eine plastifizierbare Masse wird das Gel vorzugsweise in einen Kneter gebracht, dort die insgesamt 1,5 bis 4-fache Menge von trockenem,

stossentwässertem Aluminiumleichtoxid und/oder getrocknetem Pseudoböhmitpulver und/oder getrocknetem Bayerit gegeben und so eine plastifizierbare Masse gebildet, wobei gegebenenfalls in bekannter Weise noch etwas Säure zugegeben wird. Dabei hat sich ein Mischungsverhältnis von etwa 1/3 Gel und 2/3 Aluminiumleichtoxid bzw. getrocknetes Pulver bewährt. Ein Kneter gewährleistet eine vollständige Durchmischung der beiden zugegebenen Komponenten.

Je nach dem Verwendungszweck wird nun die plastifizierbare Masse durch Formen und Trocknen bzw. Aktivieren in das Endprodukt überführt.

Für die Herstellung von schüttfähigen Formkörpern hat es sich als vorteilhaft erwiesen, die in einem Kneter hergestellte plastifizierbare Masse durch einen Extruder zu drücken. Dieser ist bevorzugt vom Typ einer Schneckenpresse bzw. eines Walzenextruders, es werden dünne Stränge gebildet, die von einer geeigneten Schneidvorrichtung in wenige Millimeter lange Stücke aufgeteilt werden.

Abschliessend werden die gebildeten Formkörper in einem warmen Luftstrom, der in der Praxis eine Temperatur von wenig oberhalb 550°C hat, getrocknet bzw. aktiviert.

Nach einer weiteren Ausführungsform des erfindungsgemässen Verfahrens wird das ungemahlene, sehr feinkörnige Aluminiumtrihydroxid wie vorstehend beschrieben entwässert und aus dem Luftstrom abgeschieden.

Dann wir jedoch das Aluminiumleichtoxid nicht unter Bildung eines im wesentlichen gelförmigen Pseudoböhmits rehydratisiert, sondern zur Aufbaugranulierung unter Zugabe von Wasser auf einen Granulierteller geleitet, die aufgerollten Granalien nach dem Erreichen eines vorgegebenen Durchmessers abgeleitet und im Luftstrom getrocknet.

Die Aufbaugranulierung erfolgt im wesentlichen im Sinne des in der Zeitschrift "Aufbereitungs-Technik" Nr. 4/1966, Seiten 177-180, beschriebenen Verfahrens und unter Verwendung der dort gezeigten Vorrichtungen.

Auf derartigen Anlagen werden vorzugsweise kugelförmige Granalien von 1 bis 10 mm Durchmesser hergestellt, wobei die grösseren Kugeln oben sind. Die Rollzeit ist jedoch nicht nur abhängig von der gewünschten Kugelgrösse, sondern auch vom Verdichtungsgrad.

Abschliessend werden die gebildeten Formkörper in einem warmen Luftstrom, der in der Praxis eine Temperatur von wenig oberhalb 550°C hat, getrocknet bzw. aktiviert.

Die mit bekannten Messverfahren durchgeführten Analysen haben ergeben, dass mit beiden Verfahren die angestrebten Porenvolumen von wenigstens 1,2 cm$^3$/g erreicht und weit übertroffen werden können. Im Gegensatz zu anderen Verfahren erfahren jedoch auch Formkörper mit hohem Porenvolumen keine nennenswerte Festigkeitsverminderung, welche sich in einem nicht tragbaren Abbröckeln wegen ungenügender Abriebfestigkeit oder durch eine ungenügende Druckfestigkeit bei Belastungen ausdrücken würde.

Es hat sich gezeigt, dass mit beiden Verfahren Formkörper von gleichwertiger Qualität hergestellt werden können.

Die Formkörper aus hochaktivem, dispersem Aluminiumleichtoxid können erfindungsgemäss als Katalysatoren, beispielsweise für die Dehydrierung, Katalysatorträger, Adsorbens
oder Trocknungsmittel eingesetzt werden.

Patentansprüche

1. Verfahren zur Herstellung von hochaktivem, dispersem Aluminiumleichtoxidhydrat,

dadurch gekennzeichnet, dass

- ungemahlenes, sehr feinkörniges Aluminiumtrihydroxid, wovon mehr als 99% der Körner eine Grösse von höchstens 3 µm haben, kontinuierlich in einen Reaktor mit einem trockenen Heissluftstrom geleitet und unter Aufwirbelung und starker Dispergierung auf 400-600°C erwärmt und stossentwässert wird, wobei im Reaktor nach wenigen Sekunden ein stationärer Zustand erreicht ist, bei welchem gleichviel teilentwässertes Aluminiumleichtoxid abfliesst, wie Aluminiumtrihydroxid zugeleitet wird,

- das aus dem Reaktor im Luftstrom abfliessende Aluminiumleichtoxid mit geeigneten mechanischen Mitteln abgeschieden, in schwach saurem oder schwach basischem Wasser dispergiert und durch Erwärmen rehydratisiert wird, wobei Aluminiumhydroxid gebildet wird, welches als gelförmiger Pseudoböhmit und/oder Bayerit vorliegt, und

- bei Temperaturen unterhalb der Aktivierungstemperatur getrocknet wird.

2. Verfahren nach Anspruch 1, dadurch gekennzeichnet, dass Aluminiumtrihydroxid mit einer mittleren Korngrösse von 0,4-0,6 µm in einem Heissluftstrom von 800-1200°C auf einen Restwassergehalt von 1-8 Gew.-% stossentwässert, und das Aluminiumleichtoxid vorzugsweise mit mindestens einem Zyklon oder Sackfilter abgeschieden wird.

3. Verfahren nach Anspruch 1 oder 2, dadurch gekennzeichnet, dass zum Rehydratisieren 10-200 kg Aluminiumleichtoxid/$m^3$ Wasser dispergiert, auf 20-100°C erwärmt und während vorzugsweise 0,5-24 Std. auf dieser Temperatur belassen werden.

4. Verfahren nach Anspruch 3, dadurch gekennzeichnet, dass das Wasser mit dem dispergierten Aluminiumleichtoxid auf 40-80°C erwärmt und während vorzugsweise 1,5-3 Std. auf dieser Temperatur belassen wird.

5. Formkörper aus hochaktivem, dispersem Aluminiumleichtoxid mit einer spezifischen Oberfläche von mindestens 200 $m^2$/g sowie hinreichender Bruch- und Abriebfestigkeit,

gekennzeichnet durch

eine sehr feine Struktur aus ungemahlenen Körnern mit einem $Na_2O$-Gehalt von weniger als 1,5 Gew.-% und einem Porenvolumen von über 1,2 $cm^3$/g, wobei mehr als 99% der Körner eine Grösse von höchstens 1 µm haben.

6. Formkörper nach Anspruch 5, dadurch gekennzeichnet, dass die mittlere Korngrösse des sie aufbauenden Aluminiumleichtoxids bei 0,4-0,6 µm und der $Na_2O$-Gehalt vorzugsweise unter 0,1 Gew.-% liegen.

7. Verfahren zur Herstellung von Formkörpern aus hochaktivem, dispersem Aluminiumleichtoxid nach Anspruch 5 oder 6,

dadurch gekennzeichnet, dass

- ungemahlenes, sehr feinkörniges Aluminiumtrihydroxid, wovon mehr als 99% der Körner eine Grösse von höchstens 3 µm haben, kontinuierlich in einen Reaktor mit einem trockenen Heissluftstrom geleitet und unter Aufwirbelung und starker Dispergierung auf 400-600°C erwärmt und stossentwässert wird, wobei im Reaktor nach wenigen Sekunden ein stationärer Zustand erreicht ist, bei welchem gleichviel teilentwässertes Alumiminiumleichtoxid abfliesst, wie Aluminiumtrihydroxid zugeleitet wird,

- das aus dem Reaktor im Luftstrom abfliessende Aluminiumleichtoxid mit geeigneten mechanischen Mitteln abgeschieden, in schwach saurem oder schwach basischem Wasser dispergiert und durch Erwärmen rehydratisiert wird, wobei Aluminiumhydroxid gebildet wird, welches grösstenteils als gelförmiger Pseudoböhmit und/oder Bayerit vorliegt,

- der gelförmige Pseudoböhmit und/oder Bayerit durch Zugabe von stossentwässertem Aluminiumleichtoxid und /oder getrocknetem Pseudoböhmitpulver und/oder getrocknetem Bayerit in einer Mischapparatur zu einer plastifizierbaren Masse verfestigt wird/werden, und

- diese Masse zu Formkörpern verarbeitet und oberhalb 550°C getrocknet bzw. aktiviert wird.

8. Verfahren nach Anspruch 7, dadurch gekennzeichnet, dass zum gelförmigen Pseudoböhmit und/oder Bayerit, vorzugsweise in einem Kneter, die 1,5 bis 4-fache Menge von trockenem stossentwässertem Aluminiumleichtoxid und/oder getrocknetem Pseudoböhmitpulver und/oder getrocknetem Bayerit gegeben und so eine plastifizierbare Masse gebildet wird.

9. Verfahren nach Anspruch 7 oder 8, dadurch gekennzeichnet, dass die plastifizierbare Masse durch einen Extruder, vorzugsweise vom Typ einer Schneckenpresse oder eines Walzenextruders, gedrückt und die gebildeten dünnen Stränge in wenige Millimeter lange Stücke aufgeteilt und in einem Luftstrom getrocknet bzw. aktiviert werden.

10. Verfahren zur Herstellung von Formkörpern aus hochaktivem, dispersem Aluminiumleichtoxid nach Anspruch 5 oder 6,

dadurch gekennzeichnet, dass

- ungemahlenes, sehr feinkörniges Aluminiumtrihydroxid, wovon mehr als 99% der Körner eine Grösse von höchstens 3 µm haben, kontinuierlich in einen Reaktor mit einem trockenen Heissluftstrom geleitet und unter Aufwirbelung und starker Dispergierung auf 400-600°C erwärmt und stossentwässert wird, wobei im Reaktor nach wenigen Sekunden ein stationärer Zustand erreicht ist, bei welchem gleichviel teilentwässertes Alumiminiumleichtoxid abfliesst, wie Aluminiumtrihydroxid zugeleitet wird,

- das aus dem Reaktor im Luftstrom abfliessende Aluminiumleichtoxid mit geeigneten mechanischen Mitteln abgeschieden wird,

- das stossentwässerte Aluminiumleichtoxid zur Aufbaugranulierung unter Zugabe von Wasser auf einen Granulierteller geleitet wird, und

- die aufgebauten Granalien nach dem Erreichen eines vorgegebenen Durchmessers abgeleitet und oberhalb 550°C getrocknet bzw. aktiviert werden.

11. Verfahren nach Anspruch 10, dadurch gekennzeichnet, dass Aluminiumtrihydroxid mit einer mittleren Korngrösse von 0,4-0,6 μm in einem Heissluftstrom von 800-1200°C auf einen Restwassergehalt von 1-8 Gew.-% stossentwässert, und das Aluminiumleichtoxid vorzugsweise mit mindestens einem Zyklon oder Sackfilter abgeschieden wird.

Europäisches
Patentamt

EUROPÄISCHER RECHERCHENBERICHT

**0176476**
Nummer der Anmeldung

EP 85 81 0394

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| A | FR-A-2 116 538 (BAYER) <br> * Seite 6, Anspruch 4 * | 1 | B 01 J 20/08 <br> C 01 F 7/02 |
| | --- | | |
| A | US-A-4 166 100 (J.K. VOROBIEV) <br> * Spalte 12, Zeilen 14-52 * | 1,3 | |
| | --- | | |
| A | EP-A-0 025 900 (KALI CHEMIE) <br> * Seite 20, Ansprüche 1,2 * | 7-9 | |
| | ----- | | |

RECHERCHIERTE
SACHGEBIETE (Int Cl 4)

B 01 J 20/08
C 01 F 7/02

Der vorliegende Recherchenbericht wurde für alle Patentansprüche erstellt

| Recherchenort <br> DEN HAAG | Abschlußdatum der Recherche <br> 17-12-1985 | Prüfer <br> LIBBERECHT-VERBEECK |
|---|---|---|